# EUROPÄISCHE PATENTANMELDUNG

(11) **EP 0 968 870 A2**
(43) Veröffentlichungstag der Anmeldung: **05.01.2000**
(21) Anmeldenummer: 99111398.6
(22) Anmeldetag: 11.06.1999
(51) Int. Cl.: B60K 37/06

(54) **Bedieneinheit einer fest in einem Fahrzeug installierten Vorrichtung**

(30) Priorität: 02.07.1998 DE 19829568
(71) Anmelder: Mannesmann VDO Aktiengesellschaft, 60388 Frankfurt am Main (DE)
(72) Erfinder: Strobel, Henry, 65843 Sulzbach (DE); Stehle, Pierre, 61191 Rosbach/Rodheim (DE)
(74) Vertreter: Klein, Thomas, Dipl.-Ing.

(57) **Zusammenfassung**

Bedieneinheiten von fest mit einem Fahrzeug verbundenen Vorrichtungen, wie Klimaanlagen oder Radiogeräte, weisen eine Vielzahl von Bedienelementen auf, die nur in bestimmten Betriebszuständen benötigt werden. Die große Anzahl der vorhandenen Bedienelemente läßt die Bedienung teilweise, zumindest für den ungeübten Nutzer, unübersichtlich erscheinen. Um eine übersichtlichere Bedieneinheit (1) zu realisieren, wird vorgeschlagen einzelne oder mehrere Bedienelemente (9, 10, 11) nur in bestimmten Betriebszuständen der Vorrichtung für den Fahrer sichtbar einzublenden.

## Beschreibung

Die Erfindung betrifft eine im Innenraum eines Fahrzeugs fest installierte Bedieneinheit, die mehrere Bedienelemente zur Einstellung unterschiedlicher Betriebszustände einer fest mit dem Fahrzeug verbundenen Vorrichtung aufweist.

Moderne Fahrzeuge weisen verschiedene fest mit dem Fahrzeug verbundene Vorrichtungen auf die dem Komfort, der Information oder der Unterhaltung des Fahrers und der Fahrzeuginsassen dienen. Beispielhaft seien die Belüftungs- und Klimatisierungsanlage, ein Radiogerät, in der Regel kombiniert mit einer Abspieleinheit für Musikkassetten oder CDs, oder auch ein Navigationsgerät genannt. Zur Bedienung dieser Vorrichtungen sind eine Vielzahl von Bedienelementen vorhanden, die möglichst einfach vom Fahrer während der Fahrt bedienbar sein müssen. Im Falle der Klimaanlage können Bedienelemente zur Auswahl eines automatischen Betriebszustandes, zur manuellen Einstellung der Temperatur für Fahrer- und Beifahrerseite, zur Einstellung der Gebläsestufen der Luftzufuhr, zur Umschaltung auf Umluftbetrieb sowie zur Auswahl der Luftausströmrichtung vorhanden sein.

Ähnlich lang ist die Liste der Bedienelemente eines modernen Autoradios. Dort sind beispielsweise Bedienelemente zur Einstellung der Lautstärke sowie unterschiedlicher Lautstärken der linken und rechten sowie der vorderen und hinteren Lautsprecher, Bedienelemente zur Klangeinstellung (Bässe und Höhen), zum ausschließlichen Empfang von Sendern, die Verkehrnachrichten senden, zur automatischen Erhöhung der Lautstärke beim Empfang von Verkehrsnachrichten, zum Suchen eines neuen Senders, zum Abspeichern der momentan stärksten Sender, zum Aufrufen abgespeicherter Sender, zur Ausgabe abgespeicherter Verkehrinformationen usw. vorhanden.

Anhand dieser beiden Beispiele ist ersichtlich, daß die große Zahl der vorhandenen Bedienelemente die Bedienung teilweise, zumindest für den ungeübten Nutzer bzw. beim Fahrzeugwechsel, unübersichtlicht erscheinen läßt. Hier setzt nun die vorliegende Erfindung an, deren Aufgabe es ist, eine fest im Fahrzeug installierte Bedieneinheit so auszugestalten, daß eine einfachere Bedienung ermöglicht wird.

Erfindungsgemäß wird die gestellte Aufgabe durch Mittel zum Ein- und Ausblenden einzelner oder mehrerer Bedienelemente in Abhängigkeit vom Betriebszustand der Vorrichtung gelöst.

Durch die erfindungsgemäße Bedieneinheit wird erreicht, daß für den Fahrer stets nur die gerade für ihn relevanten Bedienelemente sichtbar sind. Hierbei ist es beispielsweise möglich, die Bedienelemente einer Vorrichtung in Funktionsgruppen zusammenzufassen und eine gewünschte Gruppe von Bedienelementen erst dann anzuzeigen, wenn vom Fahrer diese Funktionsgruppe aktiviert wird. Dies kann beispielsweise durch Betätigen eines entsprechenden Bedienelements geschehen. Auch ist es möglich Bedienelemente, die in bestimmten Betriebzuständen ohnehin ohne Funktion sind, automatisch auszublenden und für den Fahrer unsichtbar zu machen.

Erfindungsgemäße Bedieneinheiten werden insbesondere dort vorteilhaft eingesetzt werden können, wo eine Vielzahl von Bedienfunktionen zur Verfügung steht oder wo bestimmte Bedienfunktionen nur selten benötigt werden. Bevorzugte Anwendungsfelder sind daher Bedieneinheiten für Klimaanlagen und Radiogeräte.

Steht beispielsweise bei Klimaanlagen ein Modus mit einer automatischen Einstellung der wichtigsten Parameter zur Verfügung, so können alle Bedienelemente, die eine manuelle Einstellung dieser Parameter bewirken, im Betriebszustand 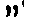 automatische Einstellung" ausgeblendet werden. Hierdurch wird die Anzahl der zur Auswahl stehenden Bedienelemente reduziert und die Bedienung übersichtlicher gestaltet.

Ähnliches gilt auch für die Anwendung im Autoradio. Dort werden viele Einstellungen nur selten geändert, während andere Einstellungen, wie zum Beispiel Lautstärke und Sendereinstellung, häufiger geändert werden. Bedienelemente, die nur selten benötigt werden, können daher im Normalbetrieb ausgeblendet werden und werden erst im Bedarfsfall aktiviert. Hier wird durch die erfindungsgemäße Bedieneinheit die Zahl der im Normalbetrieb sichtbaren Bedienelemente reduziert und damit die Bedienerfreundlichkeit erhöht. Dies gilt insbesondere, wenn das Radiogerät mit einer weiteren Vorrichtung wie beispielsweise einer Navigationsvorrichtung kombiniert ist. Gerade in einem sochen Fall ist es sinnvoll, nur die jeweils gewünschten und erforderlichen Bedienelemente für den Fahrer sichtbar zu haben. Wird beispielsweise ausschließlich Radiobetrieb gewünscht so werden die Bedienelemente für die Navigationsvorrichtung ausgeblendet.

Das Ein- und Ausblenden der verschiedenen Bedienelemente kann auf verschiedene Arten erfolgen. Nach einer ersten bevorzugten Ausführungsform kann dies dadurch erfolgen, daß bestimmte Bedienelemente in einer mechanisch beweglichen Vorrichtung, beispielsweise in Form einer Schublade, angeordnet sind. Nur bei Bedarf wird die Schublade herausgefahren, so daß die sich darin befindlichen Bedienelemente sichtbar und bedienbar sind.

Gemäß einer zweiten bevorzugten Ausführungsform ist eine mechanische Abdeckvorrichtung für die Bedienelemente, beispielsweise in Form einer Klappe, vorgesehen.

Während die vorgenannten Mittel auf mechanische Weise arbeiten, kann bei Bedienelementen mit optoelektronischer Anzeige das Ausblenden der Bedienelemente auch auf elektrischem Wege erfolgen. Ein Beispiel hierfür sind Bedienelemente in Form von Folientastaturen mit optoelektonischer Anzeige, wie Flüssigkristallanzeigen.

Die Erfindung wird nachfolgend anhand der Ausführungsbeispiele und der Abbildungen näher erläutert.

Es zeigen:
- Fig. 1: die schematisierte Darstellung einer Klimaanlage mit einer erfindungsgemäßen Bedieneinheit,
- Fig. 2: die Darstellung einer Bedieneinheit für ein Radiogerät,
- Fig. 3: ein Bedienelement mit Folientastatur und Kurzhubtaster.

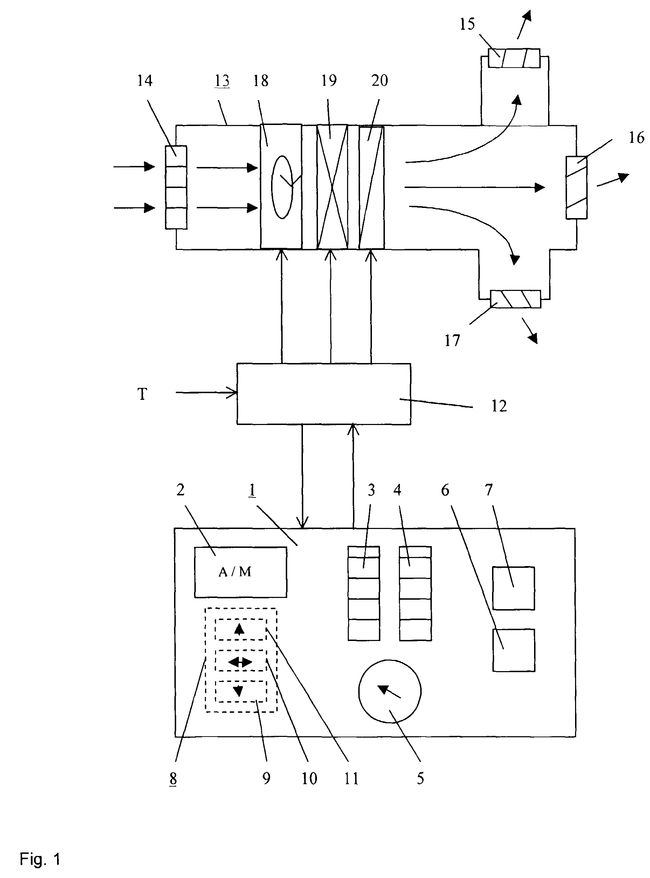

In Fig. 1 ist die Bedieneinheit 1 einer Klimaanlage dargestellt. Die Bedieneinheit enthält ein Bedienelement 2 zur Umschaltung zwischen einem automatischen und einem manuell einstellbaren Betriebszustand. Für die Einstellung der Temperatur der Fahrer- und Beifahrerseite sind Temperatureinstellelemente 3, 4 vorhanden. Mittels eines Drehschalters 5 läßt sich die Drehzahl des Lüftungsgebläses 18 einstellen. Ferner sind Bedienelemente 6, 7 vorhanden, mit denen auf Umluftbetrieb geschaltet bzw. die Heckscheibenheizung aktiviert werden kann. Die Bedienelemente 2 bis 7 sind stets für den Fahrer sichtbar und bedienbar. In einer mechanisch beweglichen Funktionseinheit 8 sind die Bedienelemente 9, 10, 11 für die Luftverteilung in den Innenraum des Fahrzeugs angeordnet.

Zur Luftzuführung in den Innenraum weist die Klimaanlage einen Luftkanal 13 auf der die Luft von der Lufteinströmöffnung 14 mittels eines Gebläses 18 über die Kühlvorrichtung 19 und die Heizvorrichtung 20 zu den Luftaustrittsdüsen 15, 16, 17 in den Innenraum leitet. Die Klimaregelung erfolgt über den Klimaregler 12, der das Gebläse 18 die Kühlvorrichtung 19 und die Heizvorrichtung 20 ansteuert. Eingangssignal für den Klimaregler sind neben der Innenraumtemperatur T, die mittles eines Temperatursensors gemessen wird, auch die Einstellgrößen, die über das Bedienelement 1 gewählt werden.

Ist mittels des Einstellelements 2 der Bedieneinheit 1 der automatische Betriebsmodus gewählt, so erfolgt die Luftverteilung im Innenraum über die Ausströmöffnungen 15, 16, 17 in einem vorgegebenen Verhältnis. Hierzu werden Klappen in den Ausströmöffnungen entsprechend einer im Regler 12 abgespeicherten Voreinstellung mittels Elekktromotoren geöffnet. Im automatischen Betriebszustand ist die Funktionseinheit 8 mit den Bedienelementen 9, 10, 11 zur Einstellung der manuellen Luftverteilung für den Fahrer nicht sichtbar. Die Funktionseinheit 8 ist dazu mechanisch beweglich in einer Schublade in der Bedieneinheit 1 angeordnet. Die Schublade ist auf Rollen gelagert und kann mittels eines Elektroantriebs linear in der Bedieneinheit 1 bewegt werden. Die Ansteuerung des Elektroantriebs erfolgt von der Regeleinheit 12. Erkennt die Regeleinheit 12, daß am Bedienelement 2 automatischer Betrieb gewählt wurde, so wird die Funktionseinheit 8 in die Bedieneinheit zurückgefahren und ist für den Fahrer nicht mehr sichtbar und bedienbar. Wird das Einstellelement 2 erneut betätigt, so wird der manuelle Betrieb ausgewählt. Die Regeleinheit 12 sorgt nun dafür, daß die Funktionseinheit 8 durch den Elektroantrieb wieder aus dem Inneren der Bedieneinheit 1 an die Bedienoberfläche herausgefahren wird und somit der Fahrer die gewünschten Einstellungen vornehmen kann.

Anstelle der beschriebenen elektromotorisch betätigten Schublade kann die Funktionseinheit 8 auch fest in der Bedienheit installiert sein und es erfolgt im automatischen Betriebsmodus eine Abdeckung der Bedienelemente 9, 10, 11 mittels einer Klappe oder einer Abdeckung, die ebenfalls elektromotorisch angetrieben vor die Funktioneinheit 8 geschoben wird. Diese Lösung ist vorzuziehen, wenn die Einbautiefe der Bedieneinheit den Einbau einer Schublade nicht zuläßt.

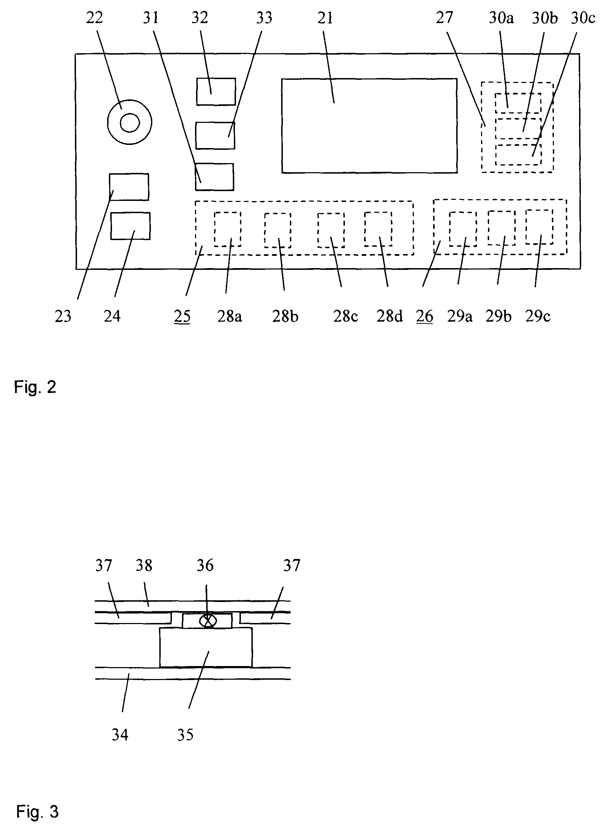

In Fig. 2 ist als weitere erfindungsgemäße Ausführungsform die Bedieneinheit eines fest in ein Fahrzeug eingebauten Radiogerätes dargestellt. Die Bedieneiheit weist eine Anzeigeeinheit 21 sowie eine Vielzahl von Bedienelementen auf, die in Gruppen angeordnet sind. Für häufig benötigte Funktionen sind stets sichtbare und bedienbare Bedienelemente vorgesehen. Dazu gehören beispielsweise das Bedienelement zur Einstellung der Lautstärke 22 und Bedienelemente zur Sendereinstellung 23, 24. Ferner sind Bedienelemente 28, 29, 30 vorhanden, die nur in bestimmten Betriebszuständen für den Fahrer sichtbar und bedienbar sind. Diese Bedienelemente 28, 29, 30 sind in Funktionsgruppen 25, 26, 27 zusammengefaßt. Jede Funktionsgruppe beinhaltet Bedienelemente 28, 29, 30 mit thematisch ähnlichen Aufgaben. So dienen beispielsweise die Bedienelemente der Funktionsgruppe 25 der gewünschten Einstellung des Klangbildes über Höhen- und Tiefenregler, sowie die Einstellung der Lautstärke einzelner Lautsprecher oder Lautsprechergruppen. Die Funktionsgruppe 26 beinhaltet Bedienelemente 28a, 28b, 28c zur Einstellung der Funktionen eines mit dem Radiogerät gekoppelten CD-Abspielgerätes während die Funktionsgruppe 27 Bedienelemente 30a, 30b, 30c einer Navigationsvorrichtung beinhaltet. Die genannten Funktionen der Funktionsgruppen 25, 26, 27 werden vom Fahrer nicht ständig benötigt, so daß deren Bedienelemente erfindungsgemäß nur in bestimmten Betriebzuständen der Vorrichtung sichtbar und bedienbar sind. Die Aktivierung, d.h. das sichtbar und bedienbar machen der Bedienelemente einer der Funktionsgruppen erfolgt über die Bedienelemente 31, 32, 33. Beispielsweise werden die Bedienelemente 28a, 28b, 28c der Funktionsgruppe 25 durch Betätigen des Bedienelementes 31 eingeblendet und bedienbar. Durch erneutes Betätigen des Bedienelementes 31 werden die Bedienelemente 28 der Funktionsgruppe 25 wieder ausgeblendet, wenn kein CD-Betrieb gewünscht wird.

Die ausblendbaren Bedienelemente 28, 29, 30 sind in diesem Ausführungsbeispiel als optoelektronische Anzeigen mit integriertem Sensor bzw. Taster in Form einer Folientastatur mit Kurzhubtastern ausgestaltet. In Fig. 3 ist ein schematisierter Querschnitt durch ein solches Bedienelement dargestellt. Auf einer Leiterplatte 34 ist ein Kurzhubtaster 35 mit integrierter Leuchtdiode 36 angeordnet. Der Kurzhubtaster 35 ist in einer Aussparung der Frontplatte 37 der Bedieneinheit angeordnet. Die Frontplatte 37 ist mit einer halbtransparenten Folie 38 (Flüssigkristallfolie) versehen. Die halbtransparente Folie ist mit einer Beschriftung oder einem Symbol versehen, das die Zuordnung der Funktion der Taste für den Fahrer ermöglicht. Befindet sich das Bedienelement im aktivierten Zustand, so leuchtet die Leuchtdiode und die Tastenbeschriftung bzw. -symbolik ist für den Fahrer sichtbar. Im nicht aktivierten Zustand ist die Leuchtdiode dagegen ausgeschaltet und die Tastenbeschriftung bzw. -symbolik ist für den Fahrer nicht erkennbar. In diesem Zustand ist auch der Kurzhubtaster 35 deaktiviert, so daß das gesamte Bedienelement nicht sichtbar und bedienbar ist.

Neben der beschriebenen Ausführungsform sind auch weitere bekannte optoelektronsiche Anzeigen in Verbindung mit Druck- oder Berührungssensoren einsetzbar (vgl z.B. ElektonikPraxis, Nr. 10, Mai 1998, S. 40 - 44). Hierzu gehören auch sogenannte Touchscreens oder Touchpanels (vgl. z.B US 5,708,460).

## Patentansprüche

1. Im Innenraum eines Fahrzeugs fest installierte Bedieneinheit (1), die mehrere Bedienelemente zur Einstellung unterschiedlicher Betriebszustände einer fest mit dem Fahrzeug verbundenen Vorrichtung aufweist, gekennzeichnet durch Mittel zum Ein- und Ausblenden einzelner oder mehrerer Bedienelemente (9, 10, 11, 28, 29, 30) in Abhängigkeit vom Betriebszustand der Vorrichtung.

2. Bedieneinheit nach Anspruch 1, dadurch gekennzeichnet, daß es sich um die Bedieneinheit einer Kimaanlage handelt.

3. Bedieneinheit nach Anspruch 1, dadurch gekennzeichnet, daß es sich um die Bedieneinheit eines Radiogerätes handelt.

4. Bedieneinheit nach Anspruch 3, dadurch gekennzeichnet, daß das Radiogerät mit einer Navigationsvorrichtung gekoppelt ist.

5. Bedieneinheit nach einem der vorhergehenden Ansprüche, dadurch gekennzeichnet, daß einzelne oder mehrere Bedienelemente in einer mechanisch beweglichen Vorrichtung angeordnet sind.

6. Bedieneinheit nach einem der Ansprüche 1 bis 4, gekennzeichnet durch eine mechanische Abdeckvorrichtung zum Ein- und Ausblenden der Bedienelemente.

7. Bedieneinheit nach einem der Ansprüche 1 bis 4, dadurch gekennzeichnet, daß es sich um Bedienelemente mit einer optoelektronischen Anzeige handelt.
